Europäisches Patentamt

European Patent Office

Office européen des brevets

(19)

(11) Publication number: **0 200 466**
A2

# EUROPEAN PATENT APPLICATION

(12)

(21) Application number: 86303057.3

(22) Date of filing: 23.04.86

(51) Int. Cl.⁴: **E 21 B 33/03**
C 09 K 7/00, C 09 K 7/06

(30) Priority: 02.05.85 US 729517

(43) Date of publication of application:
05.11.86 Bulletin 86/45

(84) Designated Contracting States:
DE GB NL

(71) Applicant: TEXACO DEVELOPMENT CORPORATION
2000 Westchester Avenue
White Plains New York 10650(US)

(72) Inventor: Walker, Clarence Oby
Route 2 Box 47B
Richmond Texas 77401(US)

(74) Representative: Burnside, Michael et al,
Michael Burnside & Partners 2 Serjeants' Inn Fleet Street
London EC4Y 1HL(GB)

(54) Method for releasing stuck drill string.

(57) A drill string which has become stuck in a wellbore due to differential pressure can be released by placing a treating fluid in the wellbore adjacent the zone where sticking has occurred. The fluid comprises an oil-external phase emulsion comprising a hydrocarbon such as diesel oil in which is dispersed from 10 to 30 percent by volume of an aqueous fluid such as sodium or calcium brine, sufficient to raise the flash point of the fluid to at least 140°F, an effective emulsion stabilizer, sufficient weighting material to make the density of the treating fluid about equal to the density of the drill fluid in the borehole, and from 20 to 40 percent by volume of a $C_1$ - $C_4$ alcohol.

EP 0 200 466 A2

METHOD FOR RELEASING STUCK DRILL STRING

AND RELEASING FLUID FOR USE   THEREIN

BACKGROUND OF THE INVENTION

Field of the Invention

This invention relates to a method for releasing a drill string which has become stuck in the borehole of an underground formation, and to a releasing fluid for use therein.

Description of the Prior Art

During drilling operations the drill string may become stuck such that it cannot be raised, lowered, or rotated. There are a number of mechanisms possible which may contribute to this problem, including (1) an accumulation of cuttings or slough build-up in the hole, (2) an undergage hole, (3) key-seating and (4) differential pressures.

This invention relates particularly to the differential pressure problem and is intended to be a novel approach to alleviating this situation.

Differential sticking may be defined as the sticking of the drill string against a permeable formation containing less pore fluid pressure than the hydrostatic pressure exerted by the drilling fluid column and usually occurs when the drill string remains motionless for a period of time. The mechanism by which this occurs involves the drill string coming into contact with

-1-

the permeable zone, remaining quiescent for a period of time sufficient for mud cake to build up on each side of the point of contact, thus sealing the pipe against the borehole. The annular pressure exerted by the drilling fluid then holds the pipe against the borehole or the permeable zone.

Freeing of differentially stuck pipe is essentially a matter of reducing this pressure differential which exists across the pipe. One method used simply involves a reduction in fluid pressure by replacing the annular fluid with a less dense fluid allowing for less pressure differential to exist between the borehole and annulus. In some cases the borehole pressure may exceed the annular pressure which in turn allows the pipe to be blown out of the borehole.

Another commonly used method to release stuck pipe is the spotting of an oil base mud in the hole opposite the stuck interval. With time, the mud cake around the stuck pipe becomes dehydrated from, theoretically, hydraulic forces that are applied, the cake cracks and falls away freeing the pipe. Also, the oil mud may penetrate between the mud cake and pipe, lubricating the area between the pipe and borehole resulting in less friction and quicker release. More often than not, an extensive period of time is necessary for the release to occur which results in an expensive loss of rig time.

In recent years, there have been a number of proprietary formulations developed aimed at releasing differentially stuck pipe. These also seem to require a great deal
of time and the success ratio is somewhat questionable.
US-A-4230587 (C.O. Walker), describes a method for
releasing stuck drill pipe utilizing polyethylene
glycol.

US-A-4494610 (C.O. Walker) describes a method
employing an aqueous fluid containing a low carbon number
alcohol. Finally US-A-3217802 (Reddie et al) use a
petroleum base fluid with an alcohol coupling agent for
the same purpose.

A first aspect of the present invention provides
therefore a method for releasing a drill string stuck in
a well bore by differential pressure, said method comprising
placing a releasing fluid in the well bore adjacent a zone
where the drill string is stuck; characterised in that said
fluid is an emulsion having a non-aqueous continuous phase
and a discontinuous or dispersed aqueous phase, said fluid
containing an effective amount of emulsion stabiliser, and
an effective amount of a $C_1$ to $C_4$ alcohol;
and in that the fluid is allowed to remain in the wellbore
for a time sufficient to cause dehydration of filter cake
adjacent the zone thereby to release the drill string.

A second aspect of the invention provides a
drill string releasing fluid characterised by an emulsion
having a non-aqueous continuous phase and a discontinuous or dispersed phase, said fluid containing effective amounts of an emulsion·stabiliser and a $C_1$ to $C_4$ alcohol.

The low molecular alcohol may be selected from methanol, ethanol, normal propanol, isopropanol, or butanol and mixtures thereof. The composition is effective in not only reducing the annular pressure exerted by the drilling fluid against the stuck drill string, but most importantly in chemically dehydrating and thereby destroying the drilling fluid mud cake. The fluid prior to use preferably has a flash point of at least $60^{\circ}C$ ($140^{\circ}F$).

By the method of the present invention, the treating fluid is pumped into the borehole. This can be accomplished by several techniques well known in the art. By one technique the additive composition is pumped down the length of the stuck drill string in a continuous process. Other methods seeks to solve the problem of stuck drill strings by injecting fluids into the formation so as to position the fluid adjacent to the zone where the sticking is thought to have occurred, and the methods employed in these prior art methods for placing the fluid may be applied to the present process. The present invention is concerned with the particular fluid employed for this process and the method by which it is compounded for application to a particular well.

The major constituent of the fluid utilized in my invention is non-aqueous, which is generally a hydrocarbon such as diesel oil, although any relatively light oil may be utilized for this purpose. High API gravity crude oils or kerosene could be utilized as well. Mineral oil, fatty acid or glycerine may also be utilized as a non-aqueous fluid which comprises the continuous phase of the treating fluid of this invention. Because of availability and low cost, however, diesel oil is the preferred fluid for use in this invention. The non-aqueous fluid will ordinarily constitute from 40 to 90 percent by volume of the fluid utilized in the process of my invention.

If the fluid to be used in the process of the invention were comprised only of the hydrocarbon or other non-aqueous fluid described above, together with the alcohol to be described further below, the resultant fluid would have a flash point so low that it would be too hazardous to use on a drilling rig. Accordingly, sufficient aqueous fluid should be dispersed in the non-aqueous fluid to raise the flash point to a value at least 60°C (140°F) and preferably at least 65°C (150°F). Conveniently, this is accomplished by incorporating from 10 to 30% and preferably from 12 to 18% by volume of water, which should contain from 250,000 to 400,000 milligrams per liter of an inorganic salt, usually sodium chloride or calcium chloride. The preferred fluid contains as the dispersed or non-continuous phase of the emulsion, a saturated solution of calcium chloride.

For the fluid to be effective it should be a stable emulsion which will not separate into separate phases if allowed to stand without agitation for prolonged periods of time. For this purpose, it is generally desirable to add an effective amount of an emulsifier to stabilize the emulsion. Emulsifiers commonly described in the prior art for use in oil base drilling fluids are very satisfactory for this purpose. Specifically, the emulsifiers described in the following U.S. patents are quite effective for stabilizing the emulsion of the present invention:

2,861,042; 2,876,197; 2,994,660; 2,999,063;

2,962,881; 2,816,073; 2,793,996.

The disclosures in these above-listed references are referred to and incorporated herein by reference for the purpose of illustrating the concentrations and compositions of primary and/or secondary emulsifiers suitable for use in the fluid of my invention.

A low carbon number alcohol, specifically $C_1$ to $C_4$ alcohol incorporated in the fluid. The concentration of alcohol is preferably from 20 to 40 and more preferably from 21 to 35% by volume. The preferred alcohols are methanol, ethanol, normal propanol, isopropanol, and butanol. Since these alcohols exhibit solubilities in both aqueous and non-aqueous phases, it is to be expected that they will partition themselves in the aqueous and non-aqueous portions of the fluid according to their relative solubilities in those fluids. The purpose of the alcohol is to dehydrate the mud cake responsible for the differential sticking of the drill string, which causes cracking and/or shrinking of the mud cake which relieves the pressure differential responsible for the sticking.

Next it is necessary to adjust the specific gravity or density of the treating fluid being employed in the process of the invention to very nearly match the specific gravity or density of the drilling fluid present in the borehole in which the drill string or drill pipe has become stuck. This will usually involve increasing the density of the treating fluid, and this is accomplished by adding the same weighting materials ordinarily added to drilling fluids to increase their density or specific gravity. Specifically, finely ground Barite, a mineral form of barium sulfate, may be added to the fluid, the amount being solely determined by the resultant specific gravity or density of the treating fluid. Iron oxide is sometimes used for this purpose as well. If the solids-supporting property of the fluid is insufficient to maintain these added particulates in suspension, a suspending agent must be added to the emulsion treating fluid to ensure that the weighting material will not settle out of the fluid. Organophilic clays may be used for this purpose. These suspending agents are prepared by reacting a quatenary ammonium salt with bentonite or attapulgite clay. The details of this and related suspending agents is given in U.S. 2,531,427 and 2,966,506, and the portion of those references describing the

-7-

suspending agents useful herein is incorporated herein by reference.

In applying the treating fluid for the practice of the invention, the fluid is injected into the drill string similarly to drilling fluid, and sufficient volume of fluid is pumped into the string so the fluid will pass to the bottom of the string, into the well bore, and back up to the zone where it is believed that the drill string sticking has occurred.

The exact mechanism responsible for the rapid and effective results obtained in the practice of the process of the invention are not known with great certainty. It is theorized that the alcohol component of the fluid dehydrates the mud cake around the stuck section of the drill string, reducing the friction and differential pressure, thereby encouraging the pipe to become released from the mud cake. It is particularly surprising that this occurs in the process of the invention, which utilizes a fluid containing from 10 to 30 percent water emulsified in the non-aqueous continuous fluid. The lubricity inherent in the non-aqueous component of the fluid used in the process of the invention may also aid in causing the stuck drill pipe to be released from the environment of the wellbore.

The method of applying the process of my invention is better understood by studying the following examples, which also serve to illustrate the effectiveness of this process, and which are included by way of illustration only.

-8-

## EXAMPLE 1 ·

Fluids for use in the process of the invention were evaluated in a laboratory apparatus to determine their effectiveness as a drilling string release agent.

In previous research on the subject of modifying filter cakes by contacting them with a treating fluid, we have determined that the physical appearance of the filter cake is a highly reproducible and accurate indicator of the effectiveness of the treatment for sufficiently dehydrating the filter cake to cause a release of a stuck drill pipe under drilling conditions. Accordingly, the following tests performed in the laboratory involve determining the change in the appearance of a drilling fluid filter cake after exposure to the test fluid for one hour.

A drilling fluid was prepared by treating a field top hole mud with 2.7 Kg/barrel (6 lbs/bbl) lignosulfonate and sufficient caustic soda to raise the pH to 10.5. This fluid was aged overnight at 65.5°C (150°F) to ensure chemical equilibrium, cooled to room temperature, then placed in filtration cells. A pressure differential of 7030.79 cm$^2$, (100 psi) was applied and filtration of the mud continued until 20-25 cc. of mud filtrate was collected from each cell. The pressure was then released, the cells dismantled, and the excess mud was removed leaving the mud filter cake in place. This cake was approximately 6.3 mm ($\frac{1}{4}$") thick. The fluid to be tested was then placed in the cell which was replaced in the holding apparatus. The 7030.79 cm$^2$ (100 psi) pressure differential was again applied and a timer was started to measure the time of exposure. The effectiveness of several compositions was then determined based on the appearance of the mud cake after exposure to the composition of this invention. The desired effect was cake dehydration and loss of cake integrity as evidenced by cracking and subsequent destruction of the filter cake.

In the first series of tests, a commercial sample of an oil base drilling fluid was utilized. This system was a substantially water free oil base material sold commercially under the Registered Trade Mark Black Magic. Tests were run using Black Magic with no additive as well as with 5, 10 and 20 volume percent isopropanol. It can be seen that neither the base fluid nor fluid containing 5 or 10 percent levels of isopropanol succeeded in accomplishing the severe dehydration of the filter cake which we have found to be necessary to ensure that the fluid will effectively cause a release of stuck drill pipe. Addition of 20 percent isopropanol to the fluid, however, did result in severe cracking of the mud cake, as is shown in the data in Table I below, indicating that a mixture of Black Magic and 20 percent isopropanol would be effective for this purpose.

## TABLE I

### Fann VG Meter

| Treatment | Temp.°F | °C | 600 | 300 | PV | YP | 1 hr. Effect on Mud Cake |
|-----------|---------|-----|------|-----|-----|-----|--------------------------|
| 0 | 137 | 58 | 300+ | 183 | -- | -- | Intact |
| 5% Isopropanol | 130 | 54 | 119 | 65 | 54 | 11 | 1 crack |
| 10% Isopropanol | 128 | 53 | 92 | 50 | 42 | 8 | 1 crack |
| 20% Isopropanol | 122 | 50 | 77 | 43 | 34 | 9 | Severe cracking |

The flash point of the 20 percent treated system, however, was 32°C (90°F), which would be unsafe for use on a drilling rig. Accordingly, it was necessary to determine whether a fluid could be prepared having a higher flash point and yet still achieve the rapid dehydration of the drilling fluid filter cake obtained when the cake was exposed to the oil base drilling fluid containing 20 percent isopropanol. For this purpose, a second series of tests was performed using an invert emulsion drilling fluid having a mud weight of 1.5 Kg/litre (15 pounds per gallon) and sold commercially under the Registered Trade Mark CARBOTEC. (CARBOTEC is a fluid having a continuous oil phase, a dispersed aqueous phase, specifically calcium chloride brine which comprises about 15% by volume, emulsifiers and sufficient Barite to raise the fluid density to 1.5 Kg/litre.

As can be seen from the data contained in Table II below, the untreated CARBOTEC accomplished essentially no dehydration of the drilling fluid filter cake, whereas the fluid comprising the invert emulsion drilling fluid and 20 volume percent isopropanol added thereto resulted in severe cracking of the drilling fluid cake after one hour of exposure. The flash point of the second sample, which comprises the invert emulsion drilling fluid treated with 20 percent isopropanol is 90°C (194°F). It is very surprising that the presence of the aqueous phase so effectively increases the flash point of the fluid and yet does not reduce the filter cake dehydration effect of the alcohol-containing fluid.

### TABLE II

#### Fann VG Meter®

| Treatment | Room Temp. | | 600 | 300 | PV | YP | 1 hr. Effect on Mud Cake |
|---|---|---|---|---|---|---|---|
| 0 | " | " | 178 | 109 | 69 | 40 | Intact |
| 20% Isopropanol | " | " | 89 | 56 | 33 | 23 | Severe cracking |

Flash point of 20% Alcohol treated Invert Mud System was 90°C (194°F).

### FIELD EXAMPLE

It is found that after a suspension in a drilling operation, drilling cannot be resumed because the drill string has become stuck in the borehole due to its contact with a drilling fluid cake which is formed along the weldbore and the cake which is formed adjacent to the contact between the drill string and the wellbore. A treating fluid is prepared according to the following. Diesel oil is used as the hydrocarbon, non-aqueous component in the fluid. To this is added 15% by weight of water essentially saturated with calcium chloride. A calcium salt of a tall oil fatty

-12-

acid is added to stabilize the water in oil emulsion. Twenty-two percent isopropanol is added to the fluid and the fluid thoroughly blended. This fluid is injected into the drill string in a sufficient volume to ensure that it has passed into the wellbore and contacts the area where the sticking is believed to have occurred. The fluid injection rate is then reduced to a very low rate, approximately one barrel per hour, which is taintained for about 4 hours. The drill string is thereby freed from the mud cake and free rotation of the drilling string is thereafter possible, permitting resumption of the drilling operation.

The above examples and disclosure illustrates the best modes contemplated by the inventor for applying the process of this invention. It is to be understood that the foregoing is illustrative only and that other means and techniques can be employed for accomplishing the benefits of the invention described herein without departing from the true spirit and scope of the invention to be defined by the claims appended hereinafter below.

CLAIMS

1. A method for releasing a drill string stuck in a wellbore by differential pressure, said method comprising placing a releasing fluid in the wellbore adjacent a zone where the drill string is stuck;

characterised in that said fluid is an emulsion having a non-aqueous continuous phase, and a discontinuous or dispersed aqueous phase, said fluid containing an effective amount of emulsion stabiliser, and an effective amount of a $C_1$ to $C_4$ alcohol;

and in that said fluid is allowed to remain in the wellbore for a time sufficient to cause dehydration of filter cake adjacent the zone thereby to release to drill string.

2. A method according to Claim 1 wherein the non-aqueous phase is a hydrocarbon.

3. A method according to Claim 2 wherein the hydrocarbon is diesel oil.

4. A method according to any preceding Claim wherein the alcohol is selected from methanol, ethanol, normal propanol, isopropanol, butanol and mixtures thereof.

5. A method according to any preceding Claim wherein the concentration of alcohol is from 20 to 40% by volume.

6. A method according to Claim 5 wherein the concentration of alcohol is from 21 to 35% by volume.

7. A method according to any preceding Claim wherein the concentration of the dispersed aqueous phase is sufficient to raise the flash point of the fluid to a value greater than $60^{\circ}C$.

8. A method according to Claim 7 wherein the concentration of the aqueous phase is sufficient to raise the flash point of the treating fluid to a volue greater than $65^{\circ}C$.

9. A method according to any preceding Claim wherein the density of the treating fluid is adjusted to a value about equal to the density of the drilling fluid present in the hole in which the drill string is stuck by addition thereto of a weighting material.

10. A method according to any preceding Claim wherein the dispersed aqueous phase is water.

11. A method according to Claim 10 wherein the water contains from 250,000 to 440,000 parts per million of sodium chloride or calcium chloride.

12. A drill string releasing fluid characterised by an emulsion having a non-aqueous continuous phase and a discontinuous or dispersed phase, said fluid containing effective amounts of an emulsion stabiliser and a $C_1$ to $C_4$ alcohol.

13. A fluid according to Claim 12 characterised in that the non-aqueous continuous phase is a hydrocarbon and in

-15-

that the dispersed aqueous phase is present in an amount to increase the flash point of the fluid to a value of at least 60$^{\circ}$C.

14. A fluid according to either of Claims 12 or 13 characterised in that the alcohol is selected from methanol, propanol or isopropanol or a mixture thereof and in that it is present in an amount of 20 to 40% by volume.

15. A fluid according to any of Claims 12 to 14 wherein the hydrocarbon is diesel oil.